# EUROPÄISCHE PATENTANMELDUNG

(11) **EP 2 607 700 A1**
(43) Veröffentlichungstag der Anmeldung: **26.06.2013**
(21) Anmeldenummer: 12007823.3
(22) Anmeldetag: 20.11.2012
(51) Int. Cl.: F04B 49/00, F15B 11/00

(54) **Druckregelanordnung mit Druckregelventil und hydraulischer Kreis damit**

(30) Priorität: 23.12.2011 DE 102011122366
(71) Anmelder: ROBERT BOSCH GMBH, 70469 Stuttgart (DE)
(72) Erfinder: Stegmaier, Horst, 89079 Ulm (DE)
(74) Vertreter: Thürer, Andreas

(57) **Zusammenfassung**

Offenbart ist eine Druckregelanordnung mit einer von einem Zulauf zu einem Ablauf durchströmbaren Hauptleitung, in der eine Düse oder Blende oder Drossel angeordnet ist. Weiterhin hat die Druckregelanordnung ein Druckregelventil, dessen Druckanschluss an die Hauptleitung stromabwärts der Düse angeschlossen ist. Über das Druckregelventil ist ein Ausgangsdruck eines Ausgangsanschlusses regelbar, wozu ein Ventilkörper des Druckregelventils aus einer Grundstellung in eine Öffnungsrichtung zur Erhöhung des Ausgangsdrucks bewegbar ist. Ein erster Druck, der von der Hauptleitung vor der Düse abgegriffen ist, wirkt in die Öffnungsrichtung. Der Ausgangsdruck und ein zweiter Druck, der von der Hauptleitung nach der Düse abgegriffen ist, wirken in eine der Öffnungsrichtung entgegen gesetzten Schließrichtung zur Verringerung des Ausgangsdrucks. Dabei ist die Düse oder Blende oder Drossel einstellbar.

Weiterhin ist ein geschlossener hydraulischer Kreis offenbart, der eine Verstellpumpe hat, an die zwei Arbeitsleitungen angeschlossen sind, wobei von einer an die Verstellpumpe gekoppelten konstanten Speisepumpe über eine Speiseleitung Druckmittel in die beiden Arbeitsleitungen jeweils in die Niederdruck führende Arbeitsleitung gefördert werden kann. Dabei ist eine vorbeschriebene Druckregelanordnung vorgesehen, deren Hauptleitung einen Abschnitt der Speiseleitung bildet, und deren Ausgangsanschluss an eine Verstellvorrichtung der Verstellpumpe angeschlossen ist.

## Beschreibung

Die Erfindung betrifft eine Druckregelanordnung mit einem Druckregelventil gemäß dem Oberbegriff des Patentanspruchs 1 und einen geschlossene hydraulischen Kreis mit einer derartigen Druckregelanordnung.

Bei Druckregelventilen soll ein Ausgangsdruck eines Ausgangsanschlusses auch bei veränderlichem Eingangsdruck eines Eingangsanschlusses eingeregelt und zum Beispiel konstant gehalten werden. Dazu ist eine Steuerfläche an einem Ventilkörper des Druckregelventils nötig, die vom Ausgangsdruck beaufschlagt ist und an der der Ausgangsdruck den Ventilkörper gegen eine Feder in Richtung einer Verkleinerung einer Durchflussöffnung vom Eingangsanschluss zum Ausgangsanschluss beaufschlagt. Dabei kann die Durchflussöffnung als regelbare Drossel angesehen werden. Eine Regelung findet natürlich nur dann statt, wenn der Eingangsdruck größer ist als der eingestellte Ausgangsdruck.

Weiterhin sind Druckregelventile bekannt, bei denen der Ausgangsanschluss zusätzlich zur Verbindung zum Eingangsdruck auch zu einem Tankanschluss entlastet werden kann. Damit kann der Ausgangsdruck auch aktiv verringern werden, wenn er aus irgendeinem Grund über den Regeldruck ansteigt. Dazu ist der Ventilkörper in einer mittleren Regelstellung zentriert und kann zur Verringerung des Ausgangsdrucks in eine erste Richtung und zu dessen Erhöhung in eine Gegenrichtung bewegt werden. Die beiden unterschiedlichen Ventilen kann man auch sprachlich voneinander abgrenzen, indem man nur das Ventil mit der Möglichkeit der Verbindung des Regelausgangs mit Tank als Druckregelventil und das Ventil ohne diese Möglichkeit als Druckreduzierventil bezeichnet.

Aus der Produktinformation RA 92003-A/03.09 oder RA 92003-A/06.09 der Anmelderin ist es bekannt, derartige Druckregelventile zur Regelung eines Verstelldrucks zu verwenden, mit dem eine in ihrem Hubvolumen verstellbare Hauptpumpe eines geschlossenen Kreislaufs verstellt wird. Dazu wird ein oben beschriebenes Druckregelventil eingangsseitig an eine Speiseleitung angeschlossen, in die von einer an die Hauptpumpe gekoppelten Speisepumpe Speisedruckmittel gefördert wird. In der vom Speisedruckmittel durchströmten Speiseleitung ist eine Blende angeordnet, an der sich je nach der durch sie hindurchstömenden Speisedruckmittelmenge ein veränderlicher Druckabfall ergibt. Der Ventilkörper des Druckregelventils wird - zusätzlich zu der oben beschriebenen Beaufschlagung mit dem zu regelenden Verstelldruck und der oder den Federn- in Öffnungsrichtung mit dem Druck vor der Blende und in Schließrichtung mit dem verminderten Speisedruck nach der Blende beaufschlagt. Über derartige Druckregelanordnungen wird also ein drehzahlabhängiger Ausgangsdruck am Druckregelventil und damit ein drehzahlabhängiger Verstelldruck für eine verstellbare Hauptpumpe erzeugt und geregelt, da die Speisepumpe üblicherweise eine Konstantpumpe ist und damit die Menge des von ihr geförderten Speisedruckmittels von ihrer Drehzahl und damit von der Drehzahl der Hauptpumpe abhängt.

Nachteilig an einer Regelung eines Ausgangsdrucks über derartige Druckregelanordnungen ist, dass sich auf Grund der Blende eine feststehende Abhängigkeit des Ausgangsdrucks von der Drehzahl der Verstellpumpe ergibt.

Bei einer Verwendung zur drehzahlabhängigen Steuerung einer Verstellpumpe ist eine bestimmte Abhängigkeit des Verstelldrucks von der Drehzahl nicht für alle Betriebsbereiche und insbesondere nicht für alle Anwendungen der Verstellpumpe die geeignete. Für unterschiedliche Anwendungen werden deshalb auch Blenden mit unterschiedlichen Durchflussquerschnitten eingesetzt.

Dem gegenüber liegt der Erfindung die Aufgabe zu Grunde, eine Druckregelanordnung mit Druckregelventil zu schaffen, bei der die Abhängigkeit des Ausgangsdrucks vom Volumenstrom einer eingangsseitig versorgten Hauptleitung beziehungsweise die Kennlinie des Ausgangsdrucks in Abhängigkeit vom Volumenstrom verändert und auch nachjustiert werden kann. Diese Aufgabe wird gelöst durch eine Druckregelanordnung mit den Merkmalen des Patentanspruchs 1.

Bezüglich eines hydraulischen geschlossenen Kreises mit einem Druckregelventil, das zur drehzahlabhängigen Steuerung einer Vertellpumpe dient, stellt sich die Aufgabe, die Komponenten des geschlossenen Kreises auf einfache Weise an die Anforderungen verschiedener Einsatzfälle anpassen zu können. Diese Aufgabe wird gelöst durch einen Kreis mit den Merkmalen des Patentanspruchs 11.

Die erfindungsgemäße Druckregelanordnung hat eine von einem Zulauf zu einem Ablauf durchströmbare Hauptleitung, in der eine Düse oder Blende oder Drossel angeordnet ist. Weiterhin hat die Druckregelanordnung ein Druckregelventil mit einem Druckanschluss, einem Tankanschluss und einem Regelanschluss. Der Druckanschluss ist an die Hauptleitung vorzugsweise stromabwärts der Düse angeschlossen. Über das Druckregelventil ist ein Ausgangsdruck im Regelanschluss regelbar, wobei dieser zur Erhöhung des Ausgangsdrucks über einen Ventilkörper des Druckregelventils mit dem Eingangsanschluss verbunden wird. Ein erster Druck, der von der Hauptleitung vor der Düse abgegriffen ist, wirkt im Sinne dieser Verbindung auf den Ventilkörper des Druckregelventils. Der Ausgangsdruck und ein zweiter Druck, der von der Hauptleitung nach der Düse abgegriffen ist, wirken im Sinne eines Verschließens der Verbindung zwischen dem Druckanschluss und dem Regelanschluss und im Sinne der Verbindung des Regelanschlusses mit dem Tankanschluss. Dabei ist die Düse oder Blende oder Drossel einstellbar. Damit kann die Abhängigkeit des Ausgangsdrucks vom Volumenstrom der Hauptleitung - beziehungsweise Kennlinie des Ausgangsdrucks in Abhängigkeit vom Volumenstrom - verändert und nachjustiert werden.

Bei einer besonders bevorzugten Weiterbildung der erfindungsgemäßen Druckregelanordnung ist der Ventilkörper in einer Grundstellung durch eine Federanordnung vorzentriert. Ausgehend von dieser Grundstellung kann in Öffnungsrichtung eine Verbindung vom Druckanschluss zum Regelanschluss und in Schließrichtung eine Verbindung vom Regelanschluss zum Tankanschluss des Druckregelventils aufgesteuert werden.

Dabei ist es vorrichtungstechnisch einfach, wenn die Federanordnung genau eine Feder hat, deren beide Endabschnitte vom Ventilkörper mitnehmbar und bewegbar sind. Die Vorspannung der Feder kann durch ein Gewinde einstellbar sein. Damit ist festlegbar, ab welcher Druckdifferenz über die Blende die Regelung des Ausgangsdrucks beginnt, und damit die Kennlinie der Abhängigkeit des Ausgangsdrucks von der Druckdifferenz über die Blende verschiebbar.

Bei einer besonders bevorzugten Weiterbildung des Druckregelventils ist der Ventilkörper ein Stufenkolben. Im Bereich eines ersten Endabschnitts des Stufenkolbens sind eine vom ersten Druck beaufschlagte erste Steuerfläche und ein erster Steuerdruckraum gebildet. Im Bereich eines zweiten Endabschnitts des Stufenkolbens sind eine vom zweiten Druck beaufschlagte zweite Steuerfläche und ein zweiter Steuerdruckraum gebildet. Beide Steuerflächen können aus einzelnen Teilflächen zusammengesetzt sein, die an verschiedenen Stellen des jeweiligen Endabschnitts angeordnet sind und zusammen eine effektiv wirksame Steuerfläche ergeben. Zwischen den beiden Endabschnitten ist eine mit dem Ausgangsdruck beaufschlagte Ringfläche angeordnet.

Bei einer bevorzugten kompakt bauenden Weiterbildung der erfindungsgemäßen Druckregelanordnung kann die Hauptleitung als Kanal in einem Gehäuse der Druckregelanordnung gebildet sein.

Bei einer bevorzugten Ausführungsform verläuft ein Parallelabschnitt der Hauptleitung etwa parallel zum Stufenkolben. Die Düse kann dann in einer etwa rechwinkligen Abwinklung in Strömungsrichtung betrachtet am Ende des Parallelabschnitts angeordnet sein und dort durch die Überdeckung von zwei zueinander beweglichen Durchgangsöffnungen gebildet werden.

Die erste Durchgangsöffnung kann gehäusefest und die zweite Durchgangsöffnung in einem kreiszylindrischen Verstellteil gebildet sein, das um eine etwa rechwinklig zum Parallelabschnitt verlaufende Drehachse drehbar ist.

Die Ränder der beiden Durchgangsöffnungen sind dann theoretisch auf einem gemeinsamen Kreiszylindermantel und praktisch auf direkt zueinander benachbarten Kreiszylindermänteln angeordnet.

Zur Einstellung des Durchmessers der Düse und damit des Druckabfalls über die bei einem gegebenen Volumenstrom kann das kreiszylindrische Verstellteil manuell drehbar sein. Damit ist eine vorrichtungstechnisch einfache Veränderungsmöglichkeit der Kennlinie des Ausgangsdrucks über dem Volumenstrom gegeben. Dazu kann das Verstellteil stirnseitig eine Aufnahme für ein Werkzeug haben.

Bei einer bevorzugten Ausgestaltung des Ventilkörpers sind die erste Steuerfläche und die zweite Steuerfläche um ein Mehrfaches größer als die Ringfläche.

Vorzugsweise sind ein Außendurchmesser der Ringfläche und die Durchmesser der ersten Steuerfläche und der zweiten Steuerfläche gleich groß. Das Verhältnis eines Innendurchmessers der Ringfläche zum Außendurchmesser kann 10/11 betragen.

Vorzugsweise ist die zweite Steuerfläche über eine Längsbohrung des Stufenkolbens mit zumindest einer Radialbohrung - vorzugsweise einem Bohrungsstern - des Stufenkolbens verbunden. Die Radialbohrung oder der Bohrungsstern ist zwischen der ersten Steuerfläche und der Ringfläche angeordnet.

Bei der Weiterbildung der erfindungsgemäßen Druckregelanordnung mit der Möglichkeit einer aktiven Druckabsenkung durch Verbindung zum Tankanschluss wird es bevorzugt, wenn die Ringfläche von einem in einem Gehäuse der Druckregelanordnung ausgebildeten Ausgangsdruckraum umfasst ist. Dabei ist zwischen dem zweiten Steuerdruckraum und dem Ausgangsdruckraum ein in dem Gehäuse ausgebildeten Tankdruckraum gebildet, der - zum Beispiel über einen Tankkanal - mit dem Tankanschluss verbunden ist.

Bei einer kompakt bauenden Druckregelanordnung sind die Hauptleitung mit der Düse und das Druckregelventil in einem gemeinsamen Gehäuse angeordnet.

Der erfindungsgemäße geschlossene hydraulische Kreis hat eine Verstellpumpe, an die zwei Arbeitsleitungen angeschlossen sind, wobei von einer mechanisch an die Verstellpumpe gekoppelten konstanten Speisepumpe über eine Speiseleitung Druckmittel jeweils in die Niederdruck führende Arbeitsleitung gefördert werden kann. Dabei ist eine vorbeschriebene Druckregelanordnung vorgesehen, deren Hauptleitung einen Abschnitt der Speiseleitung bildet, und deren Regelanschluss an eine Verstellvorrichtung der Verstellpumpe angeschlossen ist. Über eine Verstellung des Öffnungsquerschnitts der Düse und damit des Druckabfalls an der Düse ist eine Anpassung an unterschiedliche Anforderungen möglich.

Zur Einstellung der Düse kann das kreiszylindrische Verstellteil elektrisch drehbar sein. Damit kann die Kennlinie des Ausgangsdrucks über dem Volumenstrom im Betrieb der erfindungsgemäßen Druckregelanordnung in Abhängigkeit eines Betriebszustandes der Verstellpumpe nachjustiert oder verändert werden.

Vorzugsweise ist an eine Verstelldruckleitung, die den Ausgangsanschluss der Druckregeleinrichtung mit der Verstellvorrichtung verbindet, eine Druckabschneidevorrichtung angeschlossen. Über die kann der Verstelldruck der Verstelldruckleitung in Abhängigkeit des Hochdrucks der entsprechenden Arbeitsleitung derart begrenzt werden, dass ein bestimmtes Niveau des Hochdrucks nicht überschritten wird.

Bei einer vorteilhaften Ausgestaltung hat die Druckabschneidevorrichtung ein Druckabschneideventil, das über ein Wechselventil an die beiden Arbeitsleitungen - vorzugsweise über jeweilige Steuerdruckleitungen - angeschlossen ist.

Im Folgenden wird anhand der Figuren ein Ausführungsbeispiel und ein Anwendungsbeispiel der der erfindungsgemäßen Druckregelanordnung detailliert beschrieben.

Es zeigen
- Figur 1: einen Schaltplan des Ausführungsbeispiels der erfindungsgemäßen Druckregelanordnung,
- Figur 2: ein Diagramm des Ausgangsdrucks in Abhängigkeit des Volumenstroms zum Ausführungsbeispiel der erfindungsgemäßen Druckregelanordnung,
- Figur 3: einen ersten Schnitt durch das körperliche Ausführungsbeispiel der erfindungsgemäßen Druckregelanordnung,
- Figur 4: einen zweiten, parallel zum ersten Schnitt liegenden Schnitt durch das Ausführungsbeispiel,
- Figur 5: einen dritten, senkrecht zu den beiden anderen Schnitten verlaufenden Schnitt durch das Ausführungsbeispiel und
- Figur 6: einen Ausschnitt eines Ausführungsbeispiels eines geschlossenen hydraulischen Kreises mit der erfindungsgemäßen Druckregelanordnung.

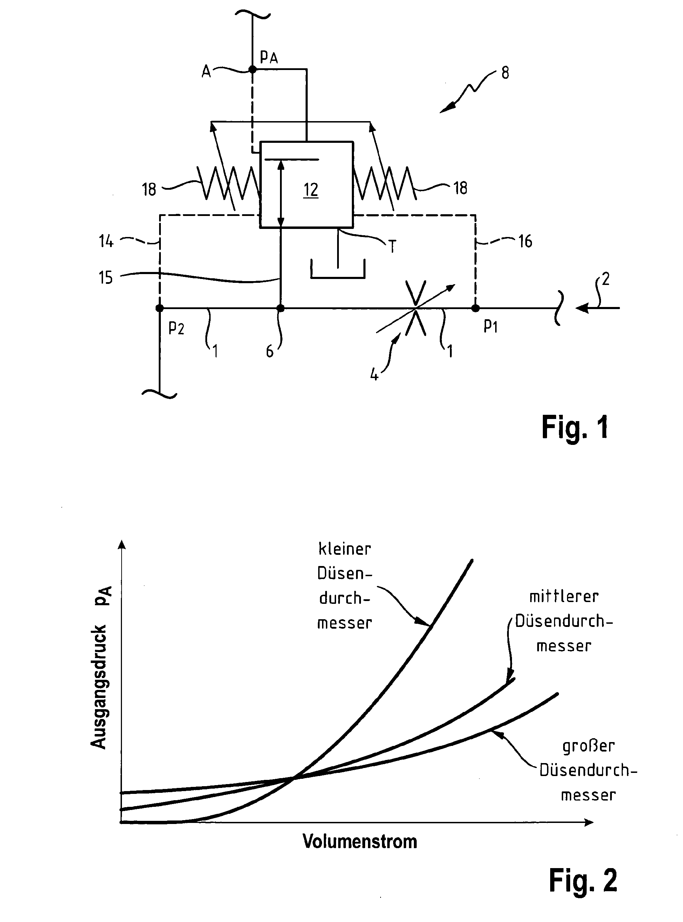

Figur 1 zeigt einen Schaltplan des Ausführungsbeispiels der erfindungsgemäßen Druckregelanordnung. Sie hat eine Hauptleitung 1, die in Richtung eines Pfeils 2 von einem Druckmittel mit veränderlichem Volumenstrom durchströmt wird. Dabei ist in der Hauptleitung 1 eine einstellbare Düse 4 angeordnet. In Strömungsrichtung hinter der Düse 4 ist ein Druckanschluss 6 eines Druckregelventils 8 angeordnet. Das Druckregelventil 8 kann vom Druckanschluss 6 zu einem Ausgangsanschluss (Regelanschluss) A durchströmt, wobei durch die Position eines stetig verstellbaren Stufenkolbens 12 ein Ausgangsdruck p_{A} am Regelanschluss A geregelt wird. Dabei ist der Stufenkolben 12 gemäß dem Grundprinzip eines Druckminderventils vom Ausgangsdruck p_{A} im Sinne eines Schließens der fluidischen Verbindung zwischen dem Druckanschluss und dem Regelanschluss beaufschlagt. Ebenfalls in Schließrichtung wirkt ein Druck p₂, der an der Hauptleitung 1 nach der Düse 4 abgegriffen und über eine zweite Steuerleitung 14 zum Stufenkolben 12 geführt ist. Dem entgegen in eine Öffnungsrichtung der genannten Verbindung wirkt am Stufenkolben 12 ein Druck p₁, der an der Hauptleitung 1 vor der Düse 4 abgegriffen und über eine erste Steuerleitung 16 zum Stufenkolben 12 geführt ist.

Der Stufenkolben 12 ist über eine gegen die Öffnungsrichtung und gegen die Schließrichtung wirkenden Feder 18 in einer mittleren Grundposition beziehungsweise Grundstellung vorgespannt. Von der Grundstellung ausgehend in Öffnungsrichtung wird die Verbindung vom Druckanschluss 6 zum Regelanschluss A aufgesteuert. Von der Grundstellung ausgehend in Schließrichtung wird eine Verbindung vom Regelanschluss A zu einem Tankanschluss T aufgesteuert, wodurch der Ausgangsdruck p_{A} durch das Druckregelventil 8 aktiv verringert werden kann.

In Abhängigkeit des Volumenstroms in der Hauptleitung 1 erzeugt die einstellbare Düse 4 einen Druckabfall p₁-p₂. Dieser Druckabfall p₁-p₂ beeinflusst den Ausgangsdruck p_{A} der Druckregelanordnung beziehungsweise des Druckregelventils 8. Figur 2 zeigt ein Diagramm des Ausgangsdrucks p_{A} in Abhängigkeit des Volumenstroms (vergleiche Pfeil 2 der Figur 1) in der Hauptleitung 1. Dabei sind für drei verschiedene Durchmesser der einstellbaren Düse 4 drei entsprechend unterschiedliche Kennlinien beispielhaft eingetragen. Über eine Verstellung der einstellbaren Düse 4 kann also eine geänderte Kennlinie der erfindungsgemäßen Druckregelanordnung gewählt werden. Genauer gesagt führt eine Vergrößerung des Durchmessers der einstellbaren Düse 4 zu einem grundsätzlich verringertem Druckabfall p₁-p₂ an dieser, so dass eine Erhöhung des Volumenstroms in der Hauptleitung 1 eine vergleichsweise geringe Erhöhung des Ausgangsdrucks p_{A} am Ausgangsanschluss A bewirkt, während umgekehrt ein verkleinerter Durchmesser der einstellbaren Düse 4 bei einer Volumenstromerhöhung in der Hauptleitung 1 zu einem vergrößerten Druckabfall p₁-p₂ an der Düse 4 und somit zu einer stärkeren Erhöhung des Ausgangsdrucks p_{A} führt. Hinzuweisen ist noch darauf, dass der Druck p₂ üblicherweise aufgrund eines angeschlossenen Druckbegrenzungsventils auf einem bestimmten Niveau verbleibt.

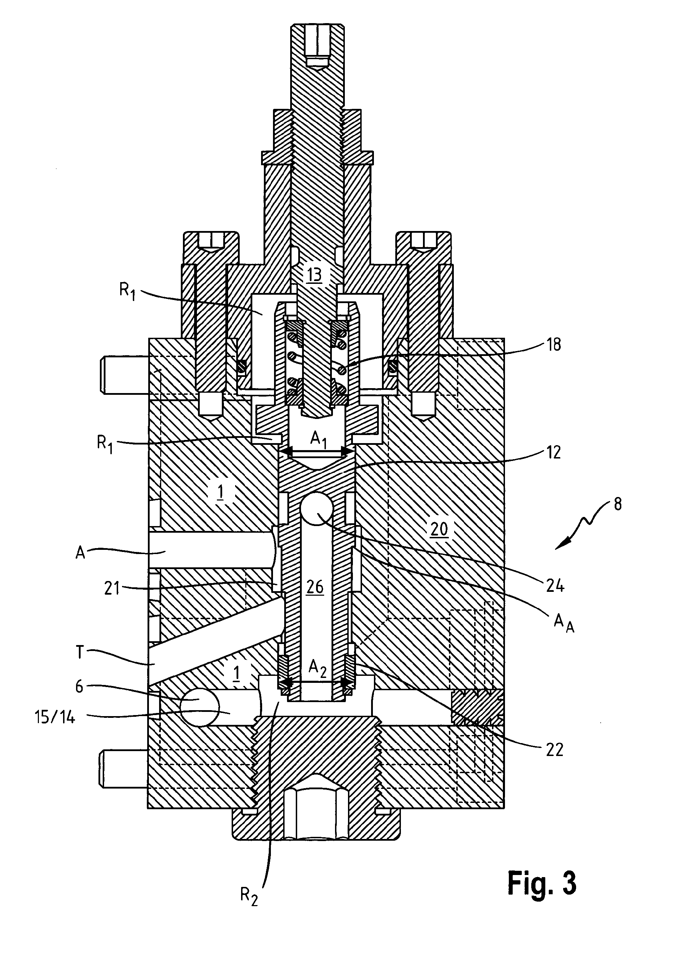

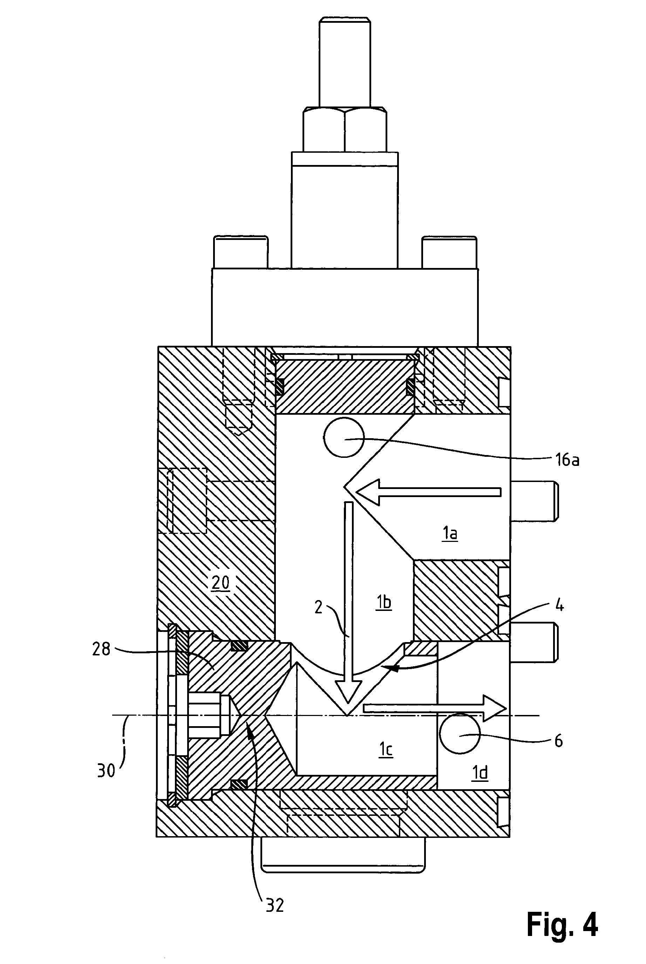

Figur 3 zeigt eine erste geschnittene Seitenansicht des Ausführungsbeispiels der erfindungsgemäßen Druckregelanordnung. Dabei sind in der gezeigten Schnittebene insbesondere Komponenten des Druckregelventils 8 gezeigt, während hinter der Schnittebene durchscheinend Teile der Hauptleitung 1 zu erkennen sind. Diese wird mit Bezug zu Figur 4 detailliert erläutert.

In einem Gehäuse 20 ist der Stufenkolben 12 (in Figur 3) längs seiner bewegbar aufgenommen. Dabei ist der Stufenkolben 12 in seiner mittleren Grundstellung gezeigt, in der der Regelanschluss A weder mit dem Tankanschluss T noch mit dem Druckanschluss 6 des Druckregelventils 8 verbunden ist. Dazu ist die als Druckfeder ausgebildete Feder 18 mit ihren beiden Endabschnitten über zwei Federteller an zwei verschiedenen Stellen mit zwei verschiedenen Kraftrichtungen mit dem Stufenkolben 12 und gleichzeitig mit einem gehäusefesten Zapfen 13 in Anlage. Somit wirkt die Feder 18 über den in Figur 3 oberen Federteller gegen die Öffnungsrichtung (Verbindung zwischen Druckanschluss und Regelanschluss betrachtet) und über den in Figur 3 unteren Federteller gegen die Schließrichtung (Verbindung zwischen Druckanschluss und Regelanschluss betrachtet) des Stufenkolbens 12. Dabei ist im Bereich der Feder 18 an einem in Figur 3 oberen Endabschnitt des Stufenkolbens 12 ein erster Steuerdruckraum R₁ angeordnet, der über eine bilanzierte wirksame erste Steuerfläche (symbolisiert durch einen Durchmesser-Pfeil) A₁ in Öffnungsrichtung des Stufenkolbens 12 wirkt. An einem in Figur 3 unteren Endabschnitt des Stufenkolbens 12 ist ein zweiter Steuerdruckraum R₂ angeordnet, der über eine stirnseitige zweite Steuerfläche (symbolisiert durch einen Durchmesser-Pfeil) A₂ in Schließrichtung des Stufenkolbens 12 wirkt. Dabei ist ein Außenrand der zweiten Steuerfläche A₂ über einen Ring 22 gebildet, der aus Montagegründen am Stufenkolben 12 befestigt ist. Beim gezeigten Ausführungsbeispiel sind die beiden gegeneinander wirkenden Steuerflächen A₁ und A₂ gleich groß und haben zum Beispiel einen Durchmesser von jeweils 11 mm.

In einem mittleren Bereich des Gehäuses 20 und des Stufenkolbens 12 ist über einen radialen Kanal und über einen mittleren Ausgangsdruckraum 21 der Regelanschluss A mit dem Stufenkolben 12 verbunden. Genauer gesagt ist in diesem mittleren Bereich des Stufenkolbens 12 eine Ringfläche A_{A} angeordnet, deren radiale Erstreckung 1mm beträgt. Über diese Ringfläche A_{A} wirkt der Ausgangsdruck p_{A} in Schließrichtung des Stufenkolbens 12.

Zwischen dem mittleren Druckraum 21 und dem (in Figur 3) oberen ersten Endabschnitt des Stufenkolbens 12 ist ein Bohrungsstern mit mehreren Radialbohrungen 24 angeordnet, der über eine Längsbohrung 26 des Stufenkolbens 12, den zweiten Steuerdruckraum R₂, und den Kanal 15 mit dem Druckanschluss 6 verbunden ist. Über die Radialbohrungen 24 kann der Druckanschluss 6 mit dem Ausgangsdruckraum 21 und damit mit dem Regelanschluss A verbunden werden. Die weitere Verbindung des Regelanschlusses A zum Tankanschluss T kann über eine umlaufende Steuerkante des Stufenkolbens 12 aufgesteuert werden.

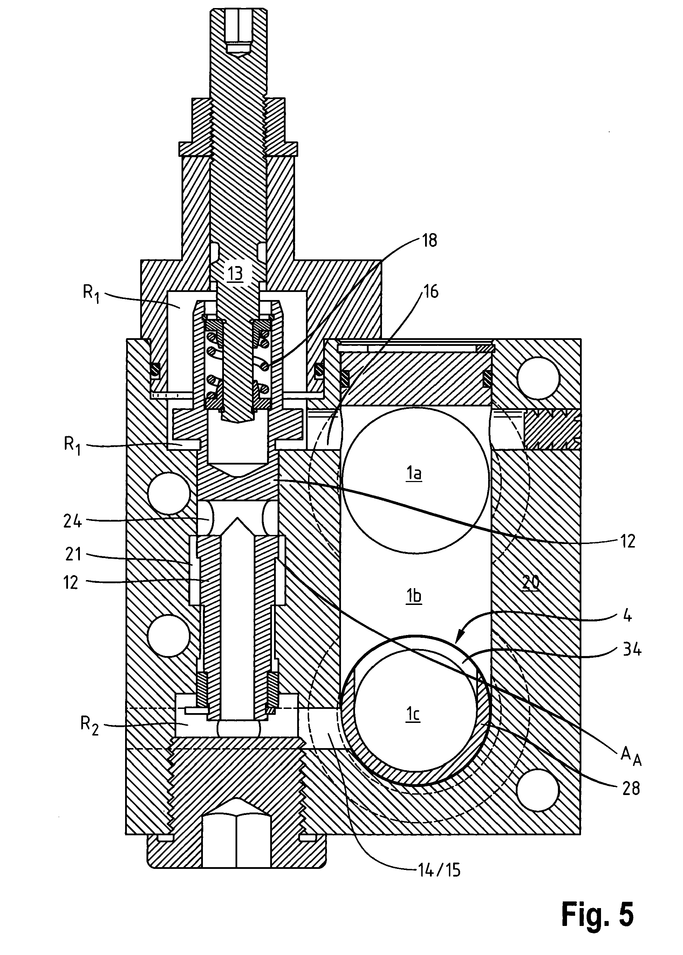

Der erste Steuerdruckraum R₁ ist über die (in Figur 1 und in Figur 5 gezeigte) erste Steuerleitung 16 mit der Hauptleitung 1 stromauf der einstellbaren Düse 4 verbunden, während der zweite Steuerdruckraum R₂ über die zweite Steuerleitung 14, die mit dem Kanal 15 zusammenfällt, und über den Druckanschluss 6 an die Hauptleitung 1 stromab der einstellbaren Düse 4 angeschlossen ist.

Figur 4 zeigt einen zweiten teilweise durchscheinend dargestellten Schnitt durch das Ausführungsbeispiel der erfindungsgemäßen Druckregelanordnung. Diese ist gegenüber der Darstellung nach Figur 3 um 180 Grad um eine parallel zur Achse des Stufenkolbens 12 verlaufende Achse gedreht. Es ist insbesondere die Hauptleitung 1 dargestellt, die im gemeinsamen Gehäuse 20 der Druckregelanordnung verläuft. Die Hauptleitung 1 hat vier Kanalabschnitte 1 a, 1 b, 1 c, 1 d, die in der genannten Reihenfolge vom Druckmittel durchströmt werden. Zwischen den beiden Kanalabschnitten 1a und 1b einerseits und zwischen den beiden Kanalabschnitten 1b und 1 c andererseits ist jeweils eine etwa rechtwinklige Abwinklung der Hauptleitung 1 vorgesehen. Im Bereich der ersten Abwinklung zwischen den Kanalabschnitten 1 a und 1 b ist ein erster Steueranschluss 16a angeordnet, über den die erste Steuerleitung 16 (vergleiche Figuren 1 und 5) an die Hauptleitung 1 angeschlossen ist. Im Bereich des ausgangsseitigen Kanalabschnitts 1d ist der Druckanschluss 6 angeordnet, der gleichzeitig als zweiter Steueranschluss dient. Über den Druckanschluss 6 ist der zweite Steuerdruckraum R₂ (vergleiche Figur 3) an die Hauptleitung 1 angeschlossen.

Die Kanalabschnitte 1 a, 1 b und 1 d sind direkt im Gehäuse 20 gebildet, während der Kanalabschnitt 1 c als Sacklochbohrung in einem Verstellteil 28 gebildet ist. Dieses ist etwa kreiszylindrisch und dabei um seine Längsachse beziehungsweise Drehachse 30 drehbar. Diese verläuft quer zu einer Längsachse des Stufenkolbens 12.

Zwischen dem gehäusefesten Kanalabschnitt 1 b und dem drehbaren Verstellteil 28 beziehungsweise dem darin gebildeten Kanalabschnitt 1c ist die einstellbare Düse 4 gebildet.

Ohne das Verstellteil 28 würde zwischen dem Kanalabschnitt 1 b und dem Kanalabschnitt 1d ein Durchflussquerschnitt bestehen, der dem Querschnitt des Kanalabschnitts 1 b entspricht. Diesen Querschnitt kann man als Durchflussquerschnitt einer gehäusefesten Durchgangsöffnung betrachten, die durch die Schnittkante zwischen den beiden Kanalabschnitten 1 b und 1 c begrenzt ist. Bei eingesetztem Verstellteil ist ein Durchfluss von Druckmittel vom Kanalabschnitt 1 b in den Kanalabschnitt 1d der Hauptleitung 1 nur über den als Sacklochbohrung im Verstellteil 28 ausgebildeten Kanalabschnitt 1c und eine als Radialbohrung durch die Wand des Verstellteils 28 hindurchgehende, in die Sacklochbohrung mündende Durchgangsöffnung 34 (siehe auch Figur 5) möglich. Der Durchmesser der Durchgangsöffnung 34 ist kleiner als der Durchmesser des Kanalabschnitts 1 b, so dass ein maximaler Durchflussquerschnitt gegeben ist, wenn sich das Verstellteil 28 in einer solchen Drehlage befindet, dass die Durchgangsöffnung 34 voll zum Kanalabschnitt 1 b offen ist. Durch Verdrehung des Verstellteils 28 kann die Durchgangsöffnung mehr oder weniger aus der Überdeckung mit dem Kanalabschnitt 1 b herausgedreht werden. verändert werden kann. Dadurch lässt sich die Größe der wirksamen Durchgangsöffnung zwischen dem Kanalabschnitt 1b und dem Kanalabschnitt 1c und damit der Düse 4 einstellen. Deren Durchflussquerschnitt ist also jeweils durch den zum Kanalabschnitt 1 b hin offenen Flächenbereich der Durchgangsöffnung 34 festgelegt.

Zur Verstellung beziehungsweise Einstellung der Düse 4 ist stirnseitig am Verstellteil 28 ein von außen zugängiger Innensechskant 32 gebildet, in den - auch währen des Betriebs der erfindungsgemäßen Druckregelanordnung - ein Werkzeug eingesetzt werden kann, um so eine andere Kennlinie (vergleiche Figur 2) zu wählen.

Figur 5 zeigt einen dritten Schnitt durch das Ausführungsbeispiel der erfindungsgemäßen Druckregelanordnung. Der Schnitt verläuft senkrecht zu den beiden Schnitten aus den Figuren 3 und 4 und geht durch die Achse des Stufenkolbens 12. Figur 5 verdeutlicht, dass die beiden Kanalabschnitte 1a und 1 c der Hauptleitung 1 quer zur Längsachse des Stufenkolbens 12 und quer zum Kanalabschnitt 1 b verlaufen. Weiterhin ist die Anordnung der einstellbaren Düse 4 verdeutlicht. Insbesondere ist die dem Verstellteil 28 zugeordnete zweite Durchgangsöffnung 34 dargestellt. Diese ist - wie Bezug zu Figur 4 erläutert - verdrehbar, um so zur Einstellung des Durchflussquerschnitts der Düse 4 in eine größere oder kleinere Überdeckung mit dem Kanalabschnitt 1 b gebracht zu werden.

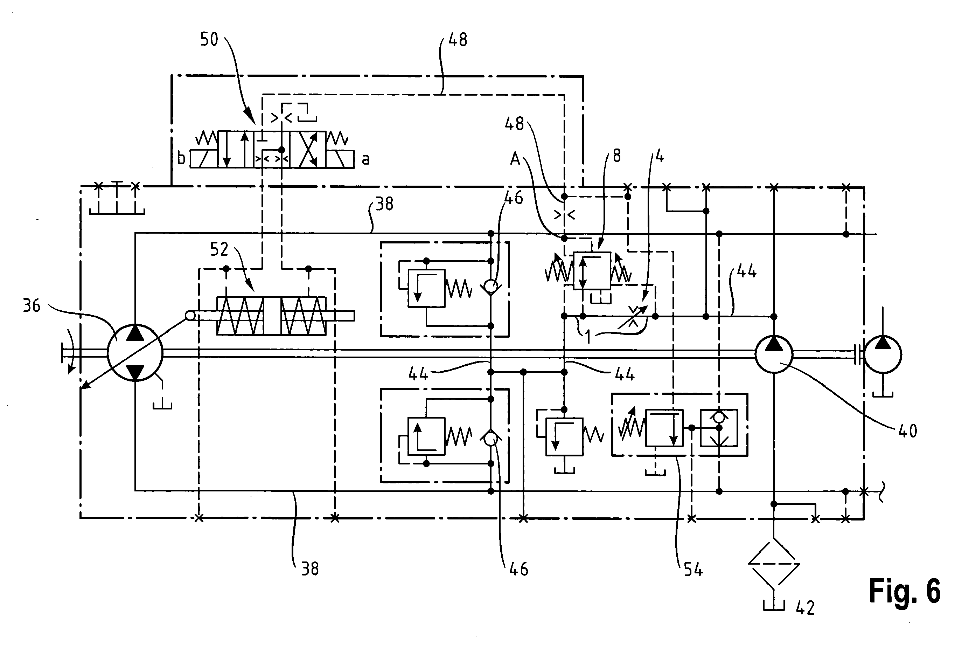

Figur 6 zeigt ein bevorzugtes Anwendungsbeispiel der erfindungsgemäßen Druckregelanordnung in einem geschlossen hydraulischen Kreis, von dem in Figur 6 nur der antriebsseitige Teil gezeigt ist. Die Druckregelanordnung entspricht dem in den vorhergehenden Figuren beschriebenen Ausführungsbeispiel und hat die Hauptleitung 1, die darin angeordnete einstellbaren Düse 4 und das daran angeschlossene Druckregelventil 8.

Der hydraulische Kreis weist eine Verstellpumpe 36 auf, von der in eine von zwei Arbeitsleitungen 38 Druckmittel gefördert werden kann. Die Verstellpumpe 36 wird von einem (nicht gezeigten) Verbrennungsmotor angetrieben, wobei über eine starre mechanische Kopplung auch eine als Konstantpumpe ausgeführte Speisepumpe 40 angetrieben wird. Diese fördert im Betrieb aus einem Tank 42 über eine Speiseleitung 44, in der sich die Düse 4 befindet, und über jeweils eines von zwei Rückschlagventilen 46 Ersatzdruckmittel in die jeweils den Niederdruck führende Arbeitsleitung 38.

Die Hauptleitung 1 der Druckregelanordnung bildet einen Abschnitt der Speiseleitung 44. An den Regelanschluss A der Druckregelanordnung beziehungsweise des Druckregelventils 8 ist eine Verstelldruckleitung 48 angeschlossen, die über ein stetig verstellbares 4/2 Wegeventil 50 einen doppelt wirkenden Verstellzylinder 52 der Verstellpumpe 36 versorgt. Dabei kann der Druck in einer zu dem Wegeventil 50 führenden Verstelldruckleitung 48 mit Hilfe einer nicht näher bezeichneten Düse und einer Druckabschneidevorrichtung 54 begrenzt werden, die anspricht, wenn der Hochdruck in der einen oder in der anderen Arbeitsleitung 38 einen bestimmten Wert übersteigt. Die Höhe des Drucks in der Speiseleitung 44 stromab der Düse 4 und damit die Höhe des Niederdrucks in einer der Arbeitsleitungen 38 ist in allgemein bekannter Weise durch die Einstellung eines aus Figur 6 ersichtlichen, jedoch nicht näher bezeichneten Druckbegrenzungsventils auf einen Wert im Bereich von 25 bis 30 bar festgelegt. Bei einer Änderung der Fördermenge der Konstantpumpe 40 ändert sich die Druckdifferenz über die Düse 4 also im Wesentlichen aufgrund eines Druckanstiegs stromauf der Düse.

Die Druckregelanordnung mit der erfindungsgemäß verstellbaren Blende beziehungsweise Drossel beziehungsweise Düse 4 dient bei dem in Figur 6 gezeigten bevorzugten Anwendungsbeispiel zur Verstellung der Verstellpumpe 36 in Abhängigkeit ihrer mit der Drehzahl der Konstantpumpe 40 übereinstimmenden Drehzahl.

Abweichend vom gezeigten Ausführungsbeispiel kann statt dem Innensechskant 32 (vergleiche Figur 4) ein elektrischer Verstelltrieb zur Verdrehung des Verstellteils 28 und damit zur Einstellung der Düse 4 vorgesehen sein. Damit kann die Kennlinie beziehungsweise der Regeldruck p_{A} im Betrieb der erfindungsgemäßen Druckregelanordnung oder des hydraulischen Kreises automatisch eingestellt werden.

In der vorhergehenden Figurenbeschreibung ist die Schließrichtung als Bewegungsrichtung des Stufenkolbens 12 zu verstehen, bei der der Regelanschluss A mit dem Tankanschluss T verbunden wird. Diese Richtung ist in den Figuren 3 bis 5 nach oben gerichtet. Die Öffnungsrichtung ist als Bewegungsrichtung des Stufenkolbens 12 zu verstehen, in der der Regelanschluss A mit dem Druckanschluss 6 verbunden wird, wodurch der Ausgangsdruck p_{A} erhöht wird. Diese Richtung ist in den Figuren 3 bis 5 nach unten gerichtet.

Offenbart ist eine Druckregelanordnung mit einer von einem Zulauf zu einem Ablauf durchströmbaren Hauptleitung, in der eine Düse oder Blende oder Drossel angeordnet ist. Weiterhin hat die Druckregelanordnung ein Druckregelventil, dessen Druckanschluss an die Hauptleitung stromabwärts der Düse angeschlossen ist. Über das Druckregelventil ist ein Ausgangsdruck eines Regelanschlusses regelbar, wozu ein Ventilkörper des Druckregelventils aus einer Grundstellung in eine Öffnungsrichtung zur Erhöhung des Ausgangsdrucks bewegbar ist. Ein erster Druck, der von der Hauptleitung vor der Düse abgegriffen ist, wirkt in die Öffnungsrichtung. Der Ausgangsdruck und ein zweiter Druck, der von der Hauptleitung nach der Düse abgegriffen ist, wirken in eine der Öffnungsrichtung entgegen gesetzten Schließrichtung zur Verringerung des Ausgangsdrucks. Dabei ist die Düse oder Blende oder Drossel einstellbar.

Weiterhin ist ein geschlossener hydraulischer Kreis offenbart, der eine Verstellpumpe hat, an die zwei Arbeitsleitungen angeschlossen sind, wobei von einer an die Verstellpumpe gekoppelten konstanten Speisepumpe über eine Speiseleitung Druckmittel in die beiden Arbeitsleitungen jeweils in die Niederdruck führende Arbeitsleitung gefördert werden kann. Dabei ist eine vorbeschriebene Druckregelanordnung vorgesehen, deren Hauptleitung einen Abschnitt der Speiseleitung bildet, und deren Regelanschluss an eine Verstellvorrichtung der Verstellpumpe angeschlossen ist.

## Patentansprüche

1. Druckregelanordnung mit einer Hauptleitung (1), in der eine Düse (4) angeordnet ist, und mit einem Druckregelventil (8) mit einem Druckanschluss (6), einem Tankanschluss (T) und einem Regelausgang, wobei der Druckanschluss (6) an die Hauptleitung (1) vorzugsweise stromabwärts der Düse (4) angeschlossen ist, wobei über das Druckregelventil (8) ein Ausgangsdruck (p_{A}) am Regelausgang (A) regelbar ist, wobei ein Ventilkörper (12) des Druckregelventils (8) im Sinne einer Verbindung des Regelausgangs mit dem Druckanschluss und einer Erhöhung des Ausgangsdrucks von einem ersten Druck (p₁) der Hauptleitung (1) stromaufwärts der Düse (4) und im Sinne einer Verbindung des Regelausgangs mit dem Tankanschluss (T) und einer Verringerung des Ausgangsdrucks vom Ausgangsdruck(p_{A}) und einem zweiten Druck (p₂) der Hauptleitung (1) stromabwärts der Düse (4) beaufschlagt wird, **dadurch gekennzeichnet, dass** die Düse (4) einstellbar ist.

2. Druckregelanordnung nach Anspruch 1, wobei der Ventilkörper (12) in einer Grundstellung durch eine Federanordnung (18) vorzentriert ist, und wobei in Öffnungsrichtung eine Verbindung vom Eingang (6) zum Ausgang (A) aufsteuerbar ist, und wobei in Schließrichtung eine Verbindung vom Ausgang (A) zu dem Tankanschluss (T) des Druckregelventils (8) aufsteuerbar ist.

3. Druckregelanordnung nach Anspruch 2, wobei die Federanordnung (18) eine Feder (18) hat, deren beide Endabschnitte bewegbar sind, und deren Vorspannung einstellbar ist.

4. Druckregelanordnung nach einem der vorhergehenden Ansprüche, wobei der Ventilkörper (12) ein Stufenkolben (12) ist, und wobei im Bereich eines ersten Endabschnitts des Stufenkolbens (12) eine vom ersten Druck (p₁) beaufschlagte, erste Steuerfläche (A₁) und ein erster Steuerdruckraum (R₁) gebildet sind, und wobei im Bereich eines zweiten Endabschnitts des Stufenkolbens (12) eine vom zweiten Druck (p₂) beaufschlagte, zweite Steuerfläche (A₂) und ein zweiter Steuerdruckraum (R₂) gebildet sind, und wobei zwischen den beiden Endabschnitten eine mit dem Ausgangsdruck beaufschlagte Ringfläche (A_{A}) angeordnet ist.

5. Druckregelanordnung nach Anspruch 4, wobei ein Kanalabschnitt (1 b) der Hauptleitung (1) etwa parallel zum Stufenkolben (12) verläuft, und wobei die Düse (4) in einer etwa rechwinkligen Abwinklung der Hauptleitung (1) in Strömungsrichtung betrachtet am Ende des Kanalabschnitts (1 b) angeordnet und durch zwei zueinander bewegliche Durchgangsöffnungen (34) gebildet ist.

6. Druckregelanordnung nach Anspruch 5, wobei die erste Durchgangsöffnung gehäusefest ist, und wobei die zweite Durchgangsöffnung (34) in einem kreiszylindrischen Verstellteil (28) gebildet ist, das um eine Drehachse (30) drehbar ist, die etwa rechwinklig zum Kanalabschnitt (1 b) verläuft.

7. Druckregelanordnung nach einem der Ansprüche 4 bis 6, wobei die erste Steuerfläche (A₁) und die zweite Steuerfläche (A₂) um ein Mehrfaches größer sind, als die Ringfläche (A_{A}).

8. Druckregelanordnung nach einem der Ansprüche 4 bis 7, wobei ein Außendurchmesser der Ringfläche (A_{A}) und die Durchmesser der ersten Steuerfläche (A₁) und der zweiten Steuerfläche (A₂) gleich groß sind.

9. Druckregelanordnung nach einem der Ansprüche 4 bis 8, wobei die zweite Steuerfläche (A₂) über eine Längsbohrung (26) des Stufenkolbens (12) mit zumindest einer Radialbohrung (24) des Stufenkolbens (12) verbunden ist, die zwischen der ersten Steuerfläche (A₁) und der Ringfläche (A_{A}) angeordnet ist.

10. Druckregelanordnung zumindest nach den Ansprüchen 2 und 4, wobei die Ringfläche (A_{A}) von einem Ausgangsdruckraum (21) umfasst ist, und wobei zwischen dem zweiten Steuerdruckraum (R₂) und dem Ausgangsdruckraum (21) ein Tankdruckraum gebildet ist, der über einen Tankkanal mit dem Tankanschluss (T) verbunden ist.

11. Geschlossener hydraulischer Kreis mit einer Verstellpumpe (36), an die zwei Arbeitsleitungen (38) angeschlossen sind, wobei von einer an die Verstellpumpe (36) gekoppelten konstanten Speisepumpe (40) über eine Speiseleitung (44) Druckmittel in die beiden Arbeitsleitungen (38) förderbar ist, und mit einer Druckregelanordnung gemäß einem der vorhergehenden Ansprüche, deren Hauptleitung (1) einen Abschnitt der Speiseleitung (44) bildet, und deren Regelanschluss (A) an eine Verstellvorrichtung (50, 52) der Verstellpumpe (36) angeschlossen ist.

12. Geschlossener hydraulischer Kreis nach einem der Anspruch 11, wobei die Düse (4) elektrisch in Abhängigkeit eines Betriebszustandes der Verstellpumpe (36) einstellbar ist.

13. Geschlossener hydraulischer Kreis nach Anspruch 11 oder 12, wobei an eine Verstelldruckleitung (48), die den Regelanschluss (A) mit der Verstellvorrichtung (50, 52) verbindet, eine Druckabschneidevorrichtung (54) angeschlossen ist, über die der Verstelldruck in der Verstelldruckleitung (48) begrenzbar ist.

14. Geschlossener hydraulischer Kreis nach Anspruch 13, wobei die Druckabschneidevorrichtung ein Druckabschneideventil hat, das über ein Wechselventil an die beiden Arbeitsleitungen angeschlossen ist.
